# EUROPÄISCHE PATENTSCHRIFT

(11) **EP 2 901 553 B1**
(45) Veröffentlichungstag und Bekanntmachung des Hinweises auf die Patenterteilung: **28.11.2018**
(21) Anmeldenummer: 13762472.2
(22) Anmeldetag: 12.09.2013
(51) Int. Cl.: H03K 17/955, B60R 25/20, B60Q 1/32, E05F 15/74, F21K 9/20

(54) **ELEKTRONISCHE SENSOREINHEIT ZUR ERFASSUNG DER BERÜHRUNGSLOSEN BETÄTIGUNG EINER TÜR ODER KLAPPE AN EINEM KRAFTFAHRZEUG**
ELECTRONIC SENSOR UNIT FOR DETECTING THE NONCONTACT ACTUATION OF A DOOR OR FLAP ON A MOTOR VEHICLE
UNITÉ DE DÉTECTION ÉLECTRONIQUE DE L'ACTIONNEMENT SANS CONTACT D'UNE PORTE OU D'UN HAYON DE VÉHICULE AUTOMOBILE

(30) Priorität: 25.09.2012 DE 102012109031
(43) Veröffentlichungstag der Anmeldung: 05.08.2015
(73) Patentinhaber: Huf Hülsbeck & Fürst GmbH & Co. KG, 42551 Velbert (DE)
(72) Erfinder: SIEG, Berthold, 46240 Bottrop (DE); KIEHL, Erik, 40878 Ratingen (DE)
(74) Vertreter: Zenz Patentanwälte Partnerschaft mbB
(86) Internationale Anmeldenummer: PCT/EP2013/068951
(87) Internationale Veröffentlichungsnummer: WO 2014/048762

(56) Entgegenhaltungen:
- DE-A1-102009 034 549
- DE-A1-102010 018 164
- JP-A- 2002 191 983
- JP-A- 2011 148 382

## Beschreibung

Die vorliegende Erfindung betrifft eine elektronische Sensoreinheit für ein Kraftfahrzeug zum Erfassen einer berührungslosen Betätigung einer Tür oder Klappe an einem Kraftfahrzeug.

Die elektronische Sensoreinheit umfasst eine Steuer- und Auswerteeinrichtung, die mit einer kapazitiven Sensorelektrode gekoppelt ist, um eine Kapazitätsänderung der Sensorelektrode bei einer Betätigung bzw. Annäherung durch einen Benutzer zu erfassen. Die Sensoreinheit umfasst ferner eine Beleuchtungseinrichtung, mit welcher ein Zielbereich auf einem Untergrund markierbar ist, wobei dieser Zielbereich dem Benutzer mitteilen soll, in welchem Bereich eine berührungslose Betätigung der Tür oder Klappe überhaupt möglich ist.

Eine mit der Sensorelektrode gekoppelte Steuer- und Auswerteschaltung erfasst eine Änderung der Kapazität der Sensorelektrode gegenüber einem Referenzpotential, indem sie die Sensorelektrode mit einer vorgegebenen Frequenz periodisch auf- und entlädt und wenigstens einen Parameter eines vom periodischen Laden und Entladen der Sensorelektrode abhängigen Strom- oder Spannungsverlaufs zur Erfassung der Kapazitätsänderung auswertet. Die Sensorelektrode reagiert dabei auf Annäherungen von Objekten durch eine Kapazitätsänderung des aus der Sensorelektrode und dem Objekt gebildeten Kondensators. Dies lässt sich im Kern darauf zurückführen, dass die Kapazität eines Kondensators von seinem Plattenabstand abhängt. Im Regelfall erhöht sich dessen Kapazität je näher das Objekt der Sensorelektrode kommt.

Kapazitive Sensoranordnungen mit Sensorelektroden, mit deren Hilfe das Eindringen eines Objekts in einen Raum vor der Sensorelektrode erfasst wird, sind im Stand der Technik bekannt.

Aus der DE 10 2008 025 669 A1 ist eine Betätigungsvorrichtung für eine Fahrzeugschliesseinrichtung bekannt, die u.a. eine optische Einrichtung umfasst, mit welcher ein Lichtstrahl auf einen Untergrund projiziert wird. Wenn dieser Lichtstrahl von einem Objekt durchbrochen wird, signalisiert dies, dass eine Tür oder Klappe entriegelt werden soll. Die aus der vorgenannten Druckschrift bekannte Betätigungsvorrichtung umfasst eine Vielzahl von Bauelemente, welche über das ganze Fahrzeug verteilt sind. Dies macht den Einbau der Vorrichtung kostenintensiv und anfällig für Montagefehler, beispielweise bei der Verkabelung der Vielzahl von Bauelementen.

Eine Moduleinheit mit einer Sensoreinrichtung geht aus der DE 10 2009 034 549 A1 hervor.

Es ist daher die Aufgabe der vorliegenden Erfindung, eine konstruktiv einfache elektronische Sensoranordnung, die unkompliziert und rasch montiert werden kann, bereitzustellen.

Diese Aufgabe wird erfindungsgemäß mit einer elektronischen Sensoreinrichtung mit den Merkmalen von Anspruch 1 gelöst.

Die erfindungsgemäße elektronische Sensoreinheit für ein Kraftfahrzeug umfasst ein Gehäuse, eine in dem Gehäuse angeordnete Steuer- und Auswerteeinrichtung, die mit einer Steuereinrichtung des Kraftfahrzeuges koppelbar ist, und zumindest eine kapazitive Sensorelektrode mit einem Detektionsbereich, wobei die kapazitive Sensorelektrode mit der Steuer- und Auswerteeinrichtung gekoppelt und in dem Gehäuse angeordnet ist und wobei eine Kapazitätsänderung der kapazitiven Sensorelektrode von der Steuer- und Auswerteeinrichtung erfasst werden kann.

Die elektronische Sensoreinheit umfasst ferner eine Beleuchtungseinrichtung mit einem Leuchtmittel, das ein optisches Signal aussenden kann, wobei die Beleuchtungseinrichtung ebenfalls mit der Steuer- und Auswerteeinrichtung gekoppelt ist und wobei mit dem optischen Signal ein den Detektionsbereich kennzeichnender Zielbereich außerhalb des Gehäuses markierbar ist.

Die Beleuchtungseinrichtung kann in oder an dem Gehäuse angeordnet sein, wobei bei der Anordnung in dem Gehäuse dieses eine Durchtrittsöffnung für das optische Signal aufweisen muss.

Unabhängig davon, ob die Beleuchtungseinrichtung in oder an dem Gehäuse angeordnet ist, ist sie stets so angeordnet, dass das Gehäuse, die Steuer- und Auswerteeinrichtung, die zumindest eine kapazitive Sensorelektrode und die Beleuchtungseinrichtung eine integrale Baugruppe bilden.

Wenn von der Steuer- und Auswerteeinrichtung ein Eindringen in den Detektionsbereich ermittelt wird und gleichzeitig die Berechtigung eines Benutzers zum Öffnen des Kraftfahrzeuges vorliegt, kann über eine Steuereinrichtung (bei welcher es sich ggf. auch um die Steuer- und Auswerteeinrichtung innerhalb der elektronischen Sensoreinheit handeln kann) eine zugeordnete Tür oder Klappe geöffnet werden.

Vorteilhafterweise sind bei der vorliegenden Erfindung sämtliche Bauteile der elektronischen Sensoreinheit innerhalb oder an einem Gehäuse angeordnet und bilden eine integrale Einheit, welche rasch und ohne eine zeitaufwändige und fehleranfällige Verkabelung montiert werden kann. Dazu wird die elektronische Sensoreinheit einfach an einer geeigneten Stelle der Fahrzeugkarosserie angebracht. Wird die elektronische Sensoreinheit innerhalb der Karosserie montiert ist für eine Durchtrittsöffnung für das optische Signal zu sorgen. Bei der Durchtrittsöffnung kann es sich einfach um eine Öffnung in der Karosserie handeln, durch welche das optische Signal austreten kann. Diese Öffnung kann zum Schutz der elektronischen Sensoranordnung mit einer optisch transparenten und ggf. farbgebenden Abdeckung versehen sein. Es ist auch möglich, dass die Durchtrittsöffnung in der Fahrzeugkarosserie von einem Abschnitt der Beleuchtungseinrichtung besetzt ist, welche bündig mit der Karosserie abschließen kann.

Die erfindungsgemäße elektronische Sensoreinheit kann für eine Mehrzahl von Kraftfahrzeugen verwendet werden, wobei es gegebenenfalls notwendig ist die Form des Gehäuses an die Gegebenheiten der jeweiligen Fahrzeugkarosserie anzupassen.

Die Annäherung eines Objektes kann mit lediglich einer kapazitiven Sensorelektrode erfasst werden. Um die Detektionsgenauigkeit zu erhöhen, ist es bei einer bevorzugten Ausführungsform der erfindungsgemäßen elektronischen Sensoreinheit vorgesehen, dass diese zwei kapazitive Sensorelektroden aufweist, die beide mit der Steuer- und Auswerteeinrichtung gekoppelt sind und beabstandet voneinander in dem Gehäuse angeordnet sind. Dabei ist es in Abhängigkeit von der Form und der Ausrichtung des Gehäuses an der Fahrzeugkarosserie bevorzugt, dass die beiden kapazitiven Sensorelektroden vertikal und horizontal versetzt zueinander sind, wenn das Gehäuse an der Kraftfahrzeugkarosserie befestigt ist. Bei einer derart ausgebildeten und montierten elektronischen Sensoranordnung kann auch die Auswertung der Bewegungsrichtung zur Verbesserung der Detektionsgenauigkeit genutzt werden.

Um die Bauhöhe des Gehäuses möglichst gering zu halten und die Fläche der kapazitiven Sensorelektroden hingegen ausreichend groß, ist es bei einer bevorzugten Ausführungsform vorgesehen, dass die kapazitive Sensorelektrode bzw. die kapazitiven Sensorelektroden als Flachelektrode(n) ausgeführt sind.

Wie bereits angedeutet, kann die erfindungsgemäße elektronische Sensoreinheit bei verschiedenen Fahrzeugtypen und bei verschiedenen Stellen eines Fahrzeuges, beispielsweise bei einer Seitentür oder der Heckklappe, zum Einsatz kommen. Unterschiedliche Fahrzeugtypen bedingen konstruktionsgemäß einen unterschiedlichen Abstand zwischen dem Leuchtmittel der Beleuchtungseinrichtung und dem Untergrund, auf welchem ein den Detektionsbereich kennzeichnender Zielbereich markiert werden soll, wobei dieser Untergrund wiederum von beispielsweise einem Karosserieteil oder dem Erdboden als solchem bereitgestellt ist.

Um die elektronische Sensoreinheit auf die vorgenannten Gegebenheiten einzustellen, ist es bei einer bevorzugten Ausführungsform der erfindungsgemäßen elektronischen Sensoreinheit vorgesehen, dass die elektronische Sensoreinheit eine Linsenanordnung umfasst, die Teil der Beleuchtungseinrichtung sein kann oder benachbart zu dieser angeordnet ist. Mit dieser Linsenanordnung kann der Zielbereich jeweils optimal auf die Gegebenheiten bei einem bestimmten Fahrzeugtyp eingestellt werden, d.h. mit der Linseneinheit kann für eine optimale Projektion des Zielbereiches auf einen Untergrund gesorgt werden, wobei die Stärke der Linsenanordnung vom Fahrzeugtyp und insbesondere von dem Abstand Leuchtmittel / Untergrund abhängig ist.

In Abhängigkeit von der Positionierung der elektronischen Sensoreinheit innerhalb bzw. an dem Kraftfahrzeug unterliegt diese einer mehr oder weniger starken regelmäßigen Verschmutzung, wodurch die Markierung des Zielbereiches auf einem Untergrund behindert wird, da sich Schmutz auf dem Leuchtmittel oder der das Leuchtmittel schützenden Abdeckung absetzt.

Bei einer bevorzugten Ausführungsform der erfindungsgemäßen elektronischen Sensoreinheit ist es daher vorgesehen, dass der Beleuchtungseinrichtung im Bereich des Leuchtmittels eine selbstreinigende Beschichtung zugeordnet ist. Diese Beschichtung kann Teil des Leuchtmittels, Teil der Beleuchtungseinrichtung selber sein oder auf der Linsenanordnung angeordnet sein, wobei die genaue bauliche Ausgestaltung und Positionierung der Beschichtung von der Anordnung und Bauweise der Beleuchtungseinrichtung und der Linsenanordnung an bzw. in dem Gehäuse abhängig ist. Es ist auch vorstellbar, dass diese Beschichtung an dem Gehäuse selber angeordnet ist, und zwar wenn die Beleuchtungseinrichtung und ggf. die Linsenanordnung vollumfänglich in dem Gehäuse aufgenommen ist und das Gehäuse eine Durchtrittsöffnung (beispielweise transparenter Bereich; Öffnung in dem Gehäuse) für das optische Signal aufweist.

Bei einer selbstreinigenden Beschichtung ist das Oberflächenverhalten gegenüber einer "normalen" Beschichtung so verändert, dass sich Schmutz schwer auf der Beschichtung festsetzen kann und bei Kontaktierung mit Wasser weitgehend von diesem abgewaschen wird. Bei einer derartigen bevorzugten Ausführungsform ist die Verschmutzung vermindert und die Reinigung erleichtert.

Erfindungsgemäß ist vorgesehen, dass die elektronische Sensoreinheit eine mit der Steuer- und Auswerteeinrichtung gekoppelte Düsenanordnung umfasst, über welche die Beleuchtungseinrichtung, oder die selbstreinigende Beschichtung, mit einem Reinigungsfluid beaufschlagt werden kann. Dabei kann es sich um gegebenenfalls mit einer Reinigungslösung versehenes Wasser handeln. Die Düsenanordnung kann in Abhängigkeit von der Anzahl der gefahrenen Kilometer aktiviert werden, alternativ wäre es vorstellbar, dass die Düsenanordnung gleichzeitig mit der Betätigung der Wascheinrichtung für die Heckscheibe oder bei einem Ausstieg des Benutzers aktiviert wird.

Als Leuchtmittel der Beleuchtungseinrichtung kann jedes gängige für die Markierung eines Zielbereiches außerhalb eines Kraftfahrzeugs geeignete Leuchtmittel verwendet werden. Bei modernen Kraftfahrzeugen wird eine solche Beleuchtung üblicherweise durch eine LED durchgeführt. Um die elektronische Sensoreinheit möglichst kostengünstig konstruieren zu können, ist es bei einer bevorzugten Ausführungsform vorgesehen, dass das Leuchtmittel, vorzugsweise ein LED-Leuchtmittel, der Beleuchtungseinrichtung direkt auf einer Platine der Steuer- und Auswerteeinrichtung angeordnet ist.

Ein Vorteil der erfindungsgemäßen elektronischen Sensoreinheit ist es, dass diese unter Anpassung des Gehäuses bei verschiedenen Kraftfahrzeugtypen verwendet werden kann. Die Anpassung an verschiedene Fahrzeugtypen macht es jedoch erforderlich, verschiedene Gehäuseformen für die verschiedenen baulichen Gegebenheiten bei den unterschiedlichen Fahrzeugtypen bereit zu stellen. Zur Vermeidung der Notwendigkeit unterschiedlicher Gehäusetypen bzw. -formen für unterschiedliche Fahrzeugtypen ist es bei einer bevorzugten Ausführungsform vorgesehen, dass das Gehäuse zumindest einen Gelenkbereich aufweist, der das Gehäuse in mehrere Gehäuseabschnitte unterteilt und diese beweglich miteinander verbindet. Das Gehäuse kann mit Hilfe dieses Gelenkbereiches, der üblicherweise in Form eines Scharniergelenkes ausgebildet sein wird, an die unterschiedlichen baulichen Gegebenheiten der unterschiedlichen Fahrzeugtypen angepasst werden. In diesem Zusammenhang ist es ferner bevorzugt, dass die kapazitiven Sensorelektroden in unterschiedlichen Gehäuseabschnitten angeordnet sind, so dass diese voneinander beabstandet sind und so die Detektionsqualität bzw. Empfindlichkeit wie oben angedeutet verbessert ist.

Bei einer alternativen bevorzugten Ausführungsform ist das Gehäuse zumindest in einem Teilbereich plastisch verformbar, so dass die elektronische Sensoreinheit in dem plastisch verformbaren Teilbereich an die Form eines Untergrundes, an welchem die elektronische Sensoreinheit befestigt werden soll, ideal anpassbar ist, wobei es sich bei diesem Untergrund üblicherweise um einen Teil einer Fahrzeugkarosserie handeln wird. Sofern die elektronische Sensoreinheit zwei kapazitive Sensorelektroden aufweist, ist es in diesem Falle bevorzugt, dass zumindest eine kapazitive Sensorelektrode in dem plastisch verformbaren Teil und beabstandet zu der anderen kapazitiven Sensorelektrode angeordnet ist.

Um die Anbringung der erfindungsgemäßen elektronischen Sensoreinheit an einem Karosseriebauteil zu vereinfachen, ist es bei einer bevorzugten Ausführungsform vorgesehen, dass zumindest ein Teilbereich des Gehäuses eine Klebebeschichtung aufweist.

Die Erfindung wird nachfolgend anhand bevorzugter Ausführungsformen erläutert, welche in der beiliegenden Zeichnung dargestellt sind, wobei
Figur 1 eine Seitenschnittansicht einer Ausführungsform der erfindungsgemäßen elektronischen Sensoreinheit zeigt,
Figuren 2 und 3 isometrische Seitenansichten einer zweiten Ausführungsform zeigen, wobei bei Figur 3 ein Teil des Gehäuses fortgelassen ist, und
Figuren 4 und 5 Draufsichten auf die in den Figuren 2 und 3 gezeigte Ausführungsform zeigen, wobei bei beiden Figur wiederum das Gehäuse und bei Figur 5 das Gehäuse und ein Teil der Beleuchtungseinrichtung fortgelassen ist.

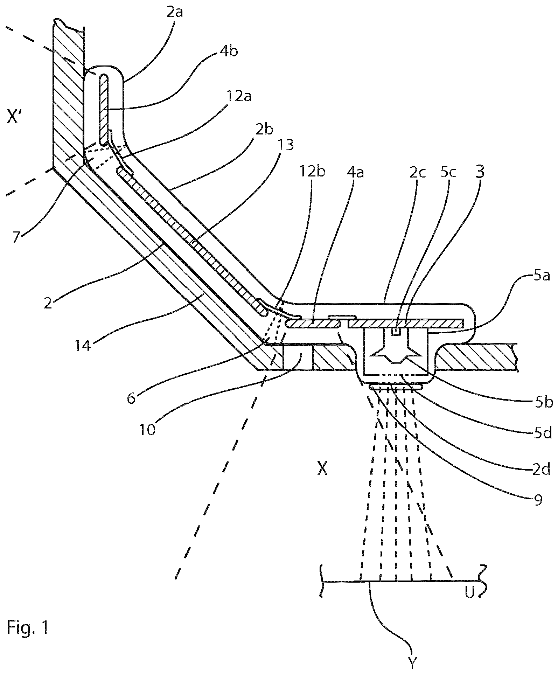

Figur 1 zeigt eine seitliche Schnittansicht einer Ausführungsform der elektronischen Sensoreinheit, wobei die elektronische Sensoreinheit an einem Karosseriebauteil 14 eines Kraftfahrzeuges befestigt ist. Die elektronische Sensoreinheit umfasst ein Gehäuse 2 mit drei Gehäuseabschnitten 2a, 2b, 2c, die über zwei Gelenkbereiche 6, 7 miteinander verbunden sind. Bei der gezeigten Ausführungsform sind die Gelenkbereiche 6, 7 des Gehäuses 2 lediglich angedeutet. Die tatsächliche konstruktive Ausführung dieser Gelenkbereiche hängt von dem jeweiligen Anwendungsfall bzw. Ort ab. Beispielsweise können die Gelenkbereiche die Funktion eines Scharniergelenkes aufweisen.

In den verschiedenen Gehäuseabschnitten 2a, 2b, 2c der elektronischen Sensoreinheit sind verschiedene Bauelemente angeordnet. In dem Gehäuseabschnitt 2c ist eine Steuer- und Auswerteeinrichtung 3 sowie eine erste kapazitive Sensorelektrode 4a angeordnet, wobei die erste kapazitive Sensorelektronik 4a mit der Steuer- und Auswerteeinrichtung 3 gekoppelt ist.

Mit der Steuer- und Auswerteeinrichtung 3 ist ferner eine Beleuchtungseinrichtung 5a mit einem Leuchtmittel 5c gekoppelt. Die Beleuchtungseinrichtung 5a umfasst eine Durchtrittsöffnung 5d, durch welche von dem Leuchtmittel 5c abgestrahltes Licht treten kann. Bei dieser Durchtrittsöffnung 5d kann es sich entweder um eine schlichte Ausnehmung bzw. Öffnung in der Beleuchtungseinrichtung 5a handeln, oder um einen transparenten Bereich in der Beleuchtungseinrichtung bzw. eine transparente Abdeckung einer Öffnung. Wesentlich ist, dass von dem Leuchtmittel ausgestrahltes Licht diese Durchtrittsöffnung zumindest teilweise durchdringen kann.

Bei der gezeigten Ausführungsform umfasst der Gehäuseabschnitt 2c eine Ausbuchtung, in welche sich zumindest ein Abschnitt der Beleuchtungseinrichtung 5a erstreckt, d.h. die Beleuchtungseinrichtung 5a ist in dem Gehäuse 2 selber angeordnet. Bei anderen Ausführungsformen ist es auch denkbar, dass die Beleuchtungseinrichtung 5a von außen auf dem Gehäuse 2 sitzt. Die vorgenannte Ausbuchtung des Gehäuses ist in einer Öffnung eines Karosserieteils 14 eines Kraftfahrzeugs angeordnet und über eine Durchtrittsöffnung 2d in dem Gehäuse kann Licht aus der elektronischen Sensoreinheit austreten und so einen Zielbereich Y auf einem Untergrund U markieren. Auch diese Durchtrittsöffnung 2d des Gehäuses 2 kann als schlichte Ausnehmung bzw. Öffnung in dem Gehäuseabschnitt 2c oder als transparenter Bereich oder transparente Abdeckung ausgebildet sein.

Bei alternativen Ausführungsformen kann die Beleuchtungseinrichtung 5a auch außen an dem Gehäuse angeordnet sein - in einem solchen Falle ist es natürlich nicht notwendig, dass das Gehäuse eine Durchtrittsöffnung für von dem Leuchtmittel abgestrahltes Licht aufweist.

Bei der gezeigten Ausführungsform ist der Beleuchtungseinrichtung 5a eine Linsenanordnung 5b zugeordnet, die in der Beleuchtungseinrichtung 5a selber angeordnet ist. Die Linsenanordnung 5b ist in Abhängigkeit von dem Abstand zwischen dem Leuchtmittel 5c und dem Untergrund U ausgewählt, so dass stets für eine optimale Fokussierung des Zielbereiches Y auf dem Untergrund gesorgt ist.

Der Beleuchtungseinrichtung 5a ist ferner eine selbstreinigende Beschichtung 9 zugeordnet, und diese ist bei der gezeigten Ausführungsform, bedingt durch die Anordnung der Beleuchtungseinrichtung vollumfänglich in dem Gehäuse 2, vor der Durchtrittsöffnung 2d des Gehäuses 2 bzw. Gehäuseabschnitts 2c angeordnet.

An den Gehäuseabschnitt 2c schließt sich über den Gelenkbereich 6 der Gehäuseabschnitt 2b an, in welchem ein Verbindungsmittel 13 angeordnet ist, das über ein Kopplungselement 12b mit der ersten kapazitiven Sensorelektrode 4a gekoppelt ist. Über ein zweites Kopplungselement 12a ist das Verbindungsmittel 13 mit einer zweiten Sensorelektrode 4b in einem Gehäuseabschnitt 2a gekoppelt, welcher sich über einen Gelenkbereich 7 an den Gehäuseabschnitt 2b anschließt.

Die erste und die zweite kapazitive Sensorelektrode 4a, 4b weisen jeweils einen Detektionsbereich X, X' auf, und von der Steuer- und Auswerteeinrichtung 3 kann ermittelt werden, wenn ein Objekt, beispielsweise der Fuß oder das Bein eines Benutzers, in einen Detektionsbereich X, X' eingebracht wird. Bei der erfindungsgemäßen elektronischen Sensoreinheit ist dieser Detektionsbereich relativ klein und mit Hilfe des auf den Untergrund U projizierten Zielbereichs Y wird auf diesen Detektionsbereich X (und X') hingewiesen, wobei es sich bei dem Untergrund in dem gezeigten Fall um den Erdboden handelt. Bei anderen Ausführungsformen kann der Untergrund auch durch ein Teil eines Kraftfahrzeugs bereitgestellt werden.

Bei der gezeigten Ausführungsform ist in dem Karosseriebauteil 14 ferner eine Düsenanordnung 10 angeordnet, über welche die Durchtrittsöffnung 2d in dem Gehäuseabschnitt 2c gereinigt werden kann. Falls die Beleuchtungseinrichtung außerhalb des Gehäuses 2 angeordnet ist, kann mit Hilfe Der Düsenanordnung 10 die Durchtrittsöffnung 5d der Beleuchtungseinrichtung 5a oder ggf. die Linsenanordnung 5b gereinigt werden.

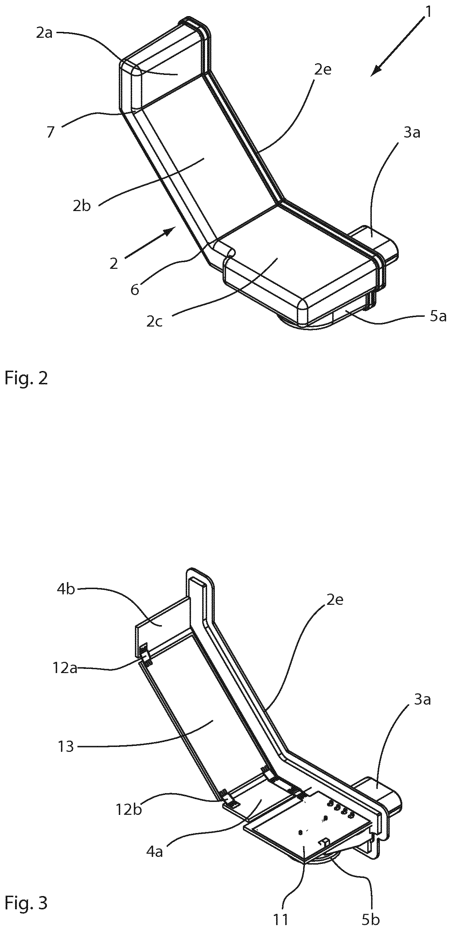

Die Figuren 2 und 3 zeigen isometrische Seitenansichten einer Ausführungsform der elektronischen Sensoreinheit, wobei bei Figur 3 ein Teil des Gehäuses 2 fortgelassen ist. Im nachfolgenden wird lediglich auf die Bauteile eingegangen, die nicht bereits unter Bezugnahme auf Figur 1 detailliert beschrieben wurden.

Bei Figur 2 ist zu erkennen, dass das Gehäuse 2 mit seinen Gehäuseabschnitten 2a, 2b, 2c aus zwei Bauteilen besteht, wobei ein Bauteil primär als Halterung für innere Einrichtungen (das "hintere" Bauteil 2e) und das anderen Bauteil primär als Abdeckung dient. Bei der in den Figuren 2 und 3 gezeigten Ausführungsform ist ferner ein Verbindungsstück 3a zu erkennen, über welches die elektronische Sensoreinheit mit einer Steuereinrichtung innerhalb des Kraftfahrzeuges koppelbar ist.

Wie es bei Figur 3 zu erkennen ist, umfasst die Steuer- und Auswerteeinrichtung 3 eine Platine 11, die mit Haltemitteln an dem Gehäusebauteil 2e fixiert ist. Diese Platine 11 ist mit der ersten kapazitiven Sensorelektrode 4a gekoppelt, die wiederum über die Kopplungselemente 12b mit dem Verbindungsmittel 13 verbunden ist, welches über ein Kopplungselement 12a mit der zweiten kapazitiven Sensorelektrode 4b gekoppelt ist.

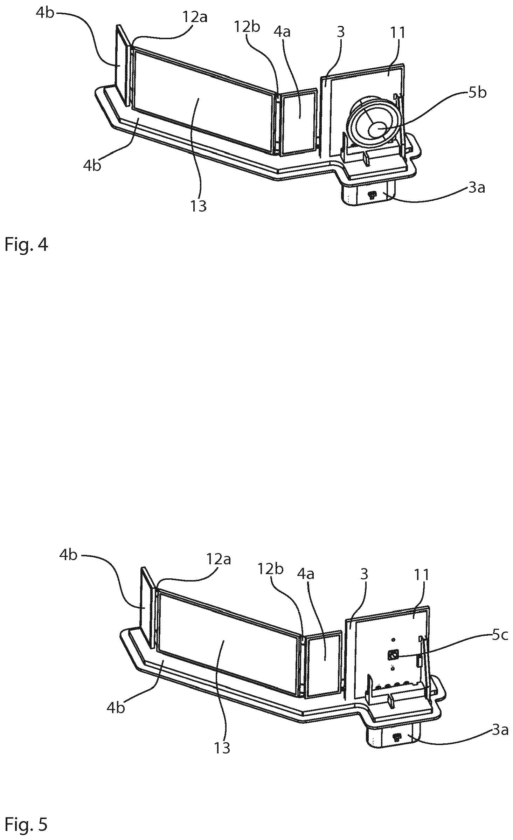

Die Figuren 4 und 5 zeigen Ansichten der in den Figuren 2 und 3 gezeigten Ausführungsform der erfindungsgemäßen elektronischen Sensoreinheit, wobei bei beiden Figuren ein Teil des Gehäuses 2 fortgelassen ist und bei Figur 5 ferner die Linsenanordnung fortgelassen ist. Auch bei der Beschreibung der Figuren 4 und 5 wird lediglich auf die Bauteile eingegangen, die nicht bereits unter Bezugnahme auf die anderen Figuren beschrieben wurden.

Wie bei Figur 4 zu erkennen ist, ist bei der gezeigten Ausführungsform die Linsenanordnung 5b direkt an der Platine 11 der Steuer- und Auswerteeinrichtung 3 angeordnet, wobei die Linsenanordnung von Halterungen des Gehäusebauteils 2e gestützt sein kann.

Innerhalb bzw. "hinter" der Linsenanordnung 5b ist das als LED ausgebildete Leuchtmittel 5c angeordnet, welches bei der gezeigten Ausführungsform direkt auf der Platine 11 befestigt ist, wie dies bei Figur 5 angedeutet ist.

Die vorstehend beschriebene Erfindung ist nicht auf die beschriebenen und/oder dargestellten Ausführungsformen beschränkt. Es ist ersichtlich, dass an der in der Zeichnung dargestellten Ausführungsform zahlreiche, dem Fachmann entsprechend der beabsichtigten Anwendung naheliegende Abänderungen vorgenommen werden können, ohne dass dadurch der Bereich der Erfindung, der durch die folgenden Ansprüche definiert wird, verlassen wird. Beispielsweise können mehr als lediglich zwei kapazitive Sensorelektroden verwendet werden.

## Patentansprüche

1. Elektronische Sensoreinheit (1) für ein Kraftfahrzeug, mit
einem Gehäuse (2),
einer in dem Gehäuse (2) angeordneten Steuer- und Auswerteeinrichtung (3), die mit einer Steuereinrichtung des Kraftfahrzeuges koppelbar ist,
zumindest einer kapazitiven Sensorelektrode (4a) mit einem Detektionsbereich (X), wobei die kapazitive Sensorelektrode (4a) mit der Steuer- und Auswerteeinrichtung (3) gekoppelt und in dem Gehäuse (2) angeordnet ist und wobei eine Kapazitätsänderung der kapazitiven Sensorelektrode (4a) von der Steuer- und Auswerteeinrichtung erfasst werden kann,
einer Beleuchtungseinrichtung (5a) mit einem Leuchtmittel (5c), das ein optisches Signal aussenden kann, wobei die Beleuchtungseinrichtung (5a) mit der Steuer- und Auswerteeinrichtung (3) gekoppelt ist und mit der Beleuchtungseinrichtung (5a) ein den Detektionsbereich (X) kennzeichnender Zielbereich (Y) außerhalb des Gehäuses markierbar ist, wobei das Gehäuse (2), die Steuer- und Auswerteeinrichtung (3), die zumindest eine kapazitive Sensorelektrode (4a) sowie die Beleuchtungseinrichtung (5a) eine integrale Baugruppe bilden, und
einer Düsenanordnung (10), über welche die Beleuchtungseinrichtung (5a) mit einem Reinigungsfluid beaufschlagt werden kann, wobei die Düsenanordnung mit der Steuer- und Auswerteeinrichtung (3) gekoppelt ist.

2. Elektronische Sensoreinheit (1) nach Anspruch 1, **dadurch gekennzeichnet, dass** die elektronische Sensoreinheit (1) zwei kapazitive Sensorelektroden (4a, 4b) aufweist, die mit der Steuer- und Auswerteelektronik (3) gekoppelt und beabstandet voneinander in dem Gehäuse (2) angeordnet sind.

3. Elektronische Sensoreinheit (1) nach Anspruch 1 oder 2, **dadurch gekennzeichnet, dass** die kapazitive(n) Sensorelektrode(n) (4a, 4b) als Flachelektrode(n) ausgebildet ist bzw. sind.

4. Elektronische Sensoreinheit (1) nach einem der Ansprüche 1 - 3, **dadurch gekennzeichnet, dass** die elektrische Sensoreinheit (1) eine Linsenanordnung (5b) umfasst.

5. Elektronische Sensoreinheit (1) nach einem der Ansprüche 1 - 4, **dadurch gekennzeichnet, dass** der Beleuchtungseinrichtung (5a) im Bereich des Leuchtmittels (5c) eine selbstreinigende Beschichtung (9) zugeordnet ist.

6. Elektronische Sensoreinheit (1) nach einem der Ansprüche 1 - 5, **dadurch gekennzeichnet, dass** das Leuchtmittel (5c) der Beleuchtungseinrichtung (5a) direkt auf einer Platine (11) der Steuer- und Auswerteeinrichtung (3) angeordnet ist.

7. Elektronische Sensoreinheit (1) nach einem der Ansprüche 1 - 6, **dadurch gekennzeichnet, dass** das Gehäuse (2) zumindest einen Gelenkbereich (6, 7) ausweist, der das Gehäuse (2) in mehrere Gehäuseabschnitte (2a, 2b, 2c) unterteilt und diese beweglich miteinander verbindet.

8. Elektronische Sensoreinheit (1) nach Anspruch 7, **dadurch gekennzeichnet, dass** die kapazitiven Sensorelektroden (4a, 4b) in unterschiedlichen Gehäuseabschnitten (2a, 2b, 2c) angeordnet sind.

9. Elektronische Sensoreinheit (1) nach einem der Ansprüche 1 - 6, **dadurch gekennzeichnet, dass** das Gehäuse (2) zumindest in einem Teilbereich plastisch verformbar ist, so dass die elektronische Sensoreinheit (1) an die Form eines Untergrundes, an welchem die elektronische Sensoreinheit (1) befestigt werden soll, anpassbar ist.

10. Elektronische Sensoreinheit (1) nach einem der Ansprüche 1 - 9, **dadurch gekennzeichnet, dass** ein Teilbereich des Gehäuses (2) eine Klebebeschichtung aufweist.

## Claims

1. An electronic sensor unit (1) for a motor vehicle, having
a housing (2),
a control and evaluation device (3) arranged in the housing (2), which can be coupled to a control device of the motor vehicle,
at least one capacitive sensor electrode (4a) having a detection region (X), the capacitive sensor electrode (4a) being coupled to the control and evaluation device (3) and arranged in the housing (2) and it being possible for the control and evaluation device to detect a capacitance change of the capacitive sensor electrode (4a),
a lighting device (5a) having a lamp (5c), which can emit an optical signal, the lighting device (5a) being coupled to the control and evaluation device (3) and it being possible to mark a target region (Y) characterizing the detection region (X) outside the housing using the lighting device (5a), the housing (2), the control and evaluation device (3), the at least one capacitive sensor electrode (4a) and the lighting device (5a) forming an integral module, and
a nozzle arrangement (10), by means of which the lighting device (5a) can be loaded with a cleaning fluid, the nozzle arrangement being coupled to the control and evaluation device (3).

2. The electronic sensor unit (1) according to Claim 1, **characterized in that** the electronic sensor unit (1) has two capacitive sensor electrodes (4a, 4b), which are coupled to the control and evaluation electronics (3) and arranged spaced from one another in the housing (2) .

3. The electronic sensor unit (1) according to Claim 1 or 2, **characterized in that** the capacitive sensor electrode(s) (4a, 4b) is or are constructed as (a) flat electrode (s) .

4. The electronic sensor unit (1) according to one of Claims 1 - 3, **characterized in that** the electric sensor unit (1) comprises a lens arrangement (5b).

5. The electronic sensor unit (1) according to one of Claims 1 - 4, **characterized in that** a self-cleaning coating (9) is assigned to the lighting device (5a) in the region of the lamp (5c).

6. The electronic sensor unit (1) according to one of Claims 1 - 5, **characterized in that** the lamp (5c) of the lighting device (5a) is arranged directly on a circuit board (11) of the control and evaluation device (3) .

7. The electronic sensor unit (1) according to one of Claims 1 - 6, **characterized in that** the housing (2) has at least one joint region (6, 7), which subdivides the housing (2) into a plurality of housing sections (2a, 2b, 2c) and connects the same to one another in a movable manner.

8. The electronic sensor unit (1) according to Claim 7, **characterized in that** the capacitive sensor electrodes (4a, 4b) are arranged in different housing sections (2a, 2b, 2c).

9. The electronic sensor unit (1) according to one of Claims 1 - 6, **characterized in that** the housing (2) can be deformed plastically at least in a subsection, so that the electronic sensor unit (1) can be adapted to the shape of a subsurface, to which the electronic sensor unit (1) should be fastened.

10. The electronic sensor unit (1) according to one of Claims 1 - 9, **characterized in that** a subsection of the housing (2) has an adhesive coating.

## Revendications

1. Unité de détection électronique (1) pour un véhicule automobile avec
un boîtier (2),
un dispositif de commande et d'exploitation (3) disposé dans le boîtier (2), qui peut être couplé à un dispositif de commande du véhicule automobile,
au moins une électrode de détection capacitive (4a) avec une zone de détection (X), l'électrode de détection capacitive (4a) étant couplée au dispositif de commande et d'exploitation (3) et étant disposée dans le boîtier (2) et une variation de capacité de l'électrode de détection capacitive (4a) pouvant être saisie par le dispositif de commande et d'exploitation,
un dispositif d'éclairage (5a) avec un moyen d'éclairage (5c), qui peut émettre un signal optique, le dispositif d'éclairage (5a) étant couplé au dispositif de commande et d'exploitation (3) et une zone cible (Y) caractérisant la zone de détection (X) avec le dispositif d'éclairage (5a) étant repérable en dehors du boîtier, le boîtier (2), le dispositif de commande et d'exploitation (3), au moins une électrode de détection capacitive (4a) ainsi que le dispositif d'éclairage (5a) formant un ensemble intégral, et
un agencement de buse (10) par le biais duquel le dispositif d'éclairage (5a) peut être sollicité avec un liquide de nettoyage, l'agencement de buse étant couplé au dispositif de commande et d'exploitation (3).

2. Unité de détection électronique (1) selon la revendication 1, **caractérisée en ce que** l'unité de détection électronique (1) comporte deux électrodes de détection capacitives (4a, 4b) qui sont couplées au système électronique de commande et d'exploitation (3) et sont disposées à distance l'une de l'autre dans le boîtier (2).

3. Unité de détection électronique (1) selon la revendication 1 ou 2, **caractérisée en ce que** l'/les électrode(s) de détection capacitive (s) (4a, 4b) est ou sont constituée(s) sous la forme d'électrode(s) plate (s) .

4. Unité de détection électronique (1) selon l'une quelconque des revendications 1 - 3, **caractérisée en ce que** l'unité de détection électronique (1) comprend un ensemble à lentilles (5b).

5. Unité de détection électronique (1) selon l'une quelconque des revendications 1 - 4, **caractérisée en ce qu'**un revêtement autonettoyant (9) est attribué au dispositif d'éclairage (5a) dans la zone du moyen d'éclairage (5c).

6. Unité de détection électronique (1) selon l'une quelconque des revendications 1 - 5, **caractérisée en ce que** le moyen d'éclairage (5c) du dispositif d'éclairage (5a) est disposé directement sur une platine (11) du dispositif de commande et d'exploitation (3).

7. Unité de détection électronique (1) selon l'une quelconque des revendications 1 - 6, **caractérisée en ce que** le boîtier (2) comporte au moins une zone articulée (6, 7) qui subdivise le boîtier (2) en plusieurs sections de boîtier (2a, 2b, 2c) et relie celles-ci de façon mobile entre elles.

8. Unité de détection électronique (1) selon la revendication 7, **caractérisée en ce que** les électrodes de détection capacitives (4a, 4b) sont disposées dans des sections de boîtier différentes (2a, 2b, 2c).

9. Unité de détection électronique (1) selon l'une quelconque des revendications 1 - 6, **caractérisée en ce que** le boîtier (2) peut être déformé plastiquement au moins dans une partie de zone de telle sorte que l'unité de détection électronique (1) peut être adaptée à la forme d'un fond, sur lequel doit être fixée l'unité de détection électronique (1).

10. Unité de détection électronique (1) selon l'une quelconque des revendications 1 - 9, **caractérisée en ce qu'**une partie de zone du boîtier (2) comporte un revêtement adhésif.
